# EUROPÄISCHE PATENTSCHRIFT

(11) **EP 4 098 516 B1**
(45) Veröffentlichungstag und Bekanntmachung des Hinweises auf die Patenterteilung: **30.07.2025**
(21) Anmeldenummer: 21176887.4
(22) Anmeldetag: 31.05.2021
(51) Int. Cl.: B62D 5/00

(54) **STEER-BY-WIRE-LENKSYSTEM MIT FEEDBACK-AKTUATOR AUSSERHALB DER LENKSÄULE**
STEER-BY-WIRE STEERING SYSTEM WITH FEEDBACK ACTUATOR OUTSIDE THE STEERING COLUMN
SYSTÈME DE DIRECTION « STEER-BY-WIRE » POURVU D'ACTIONNEUR DE RETOUR À L'EXTÉRIEUR DE LA COLONNE DE DIRECTION

(43) Veröffentlichungstag der Anmeldung: 07.12.2022
(73) Patentinhaber: thyssenkrupp Presta Aktiengesellschaft, 9492 Eschen (LI); thyssenkrupp AG, 45143 Essen (DE)
(72) Erfinder: Ficca, Riccardo, 6811 Göfis (AT); Polmans, Kristof, 6464 Tarrenz (AT)
(74) Vertreter: thyssenkrupp Intellectual Property GmbH

(56) Entgegenhaltungen:
- EP-A1- 2 796 343
- DE-A1- 10 046 168
- DE-A1- 10 051 187
- DE-A1- 102018 126 714
- DE-A1- 102018 132 172
- DE-A1- 102019 212 749
- US-A1- 2003 146 038

## Beschreibung

Die Erfindung betrifft ein Steer-by-Wire-Lenksystem für ein Kraftfahrzeug, welches eine Lenksäule mit einer Trageinheit und einer drehbar in der Lenksäule gelagerten Lenkwelle, eine an der Lenkwelle drehfest angeordnete Lenkhandhabe sowie einen Feedback-Aktuator umfasst, wobei der Feedback-Aktuator ausgebildet ist, ein Drehmoment auf die Lenkwelle aufzubringen, und wobei der Feedback-Aktuator außerhalb der Trageinheit angeordnet ist. Des Weiteren betrifft die Erfindung ein Kraftfahrzeug mit einem Steer-by-Wire-Lenksystem.

Im Stand der Technik sind Steer-by-Wire-Lenksysteme bekannt, bei denen der Feedback-Aktuator, auch Handkraftsteller genannt, in die Lenksäule oder das Lenkrad des Kraftfahrzeuges integriert sind. So offenbart die DE 10 2018 129 264 A1 ein Lenksystem mit einem Feedback-Aktuator, bei dem die Rückstellkraft oder das Rückstellmoment durch einen elektrischen Aktuator gebildet wird, dessen Stator mit der Lenkradnabe eines Lenkrades und dessen Rotor mit dem Lenkradkranz eines Lenkrades gekoppelt ist. Die Lenkradnabe ist dabei direkt an einer Lenkwelle einer Lenksäule angeordnet. Eine weitere Ausgestaltung eines Steer-by-Wire-Lenksystems ist beispielsweise in der DE 10 2018 101 528 A1 beschrieben. Dieses Lenksystem umfasst eine verstellbare Lenksäule mit einer Trageinheit und mit einer drehbar in der Trageinheit gelagerten Lenkwelle. Ein Feedback-Aktuator dieses Lenksystems umfasst einen Elektromotor, der über ein mit der Lenkwelle zum Übertragen eines Drehmomentes verbundenes Antriebsbauteil die Lenkwelle antreiben kann.

Weiter ist aus der DE 100 46 168 A1 ein Lenksystem mit einer Schaltkupplung bekannt. Das Lenksystem kann dabei bei geöffneter Schaltkupplung als Steer-by-Wire-Lenksystem betrieben werden, wobei ein Feedback-Aktuator bei geöffneter Schaltkupplung dafür vorgesehen ist, ein Lenkgefühl zu vermitteln. Auch die DE 100 51 187 A1 offenbart ein Steer-by-Wire-Lenksystem mit einem Feedback-Aktuator, der ein auf eine Lenkhandhabe wirkendes Feder- und Dämpfungselement aufweist. Ein gattungsgemäßes Steer-by-Wire-Lenksystem offenbart zudem die DE 10 2018 132 172 A1. Der Lenkmittelaktuator ist dabei außerhalb der Trageinheit fest und unverschiebbar an einem Armaturentafelträger des Kraftfahrzeugs angebracht.

Nachteilig bei bekannten Steer-by-Wire-Lenksystemen ist, dass für die Lenksäule und für den Feedback-Aktuator zur Bereitstellung der unterschiedlichen Funktionen, insbesondere für die Bereitstellung verschiedener Funktionalitäten der Erzeugung des Rückstellmoments an der Lenkwelle, nicht wenig Bauraum im Kraftfahrzeug im Bereich der Lenksäule und somit nahe an der Mensch-Fahrzeug-Schnittstelle benötigt wird. Dieser Raum steht somit nur eingeschränkt für andere Fahrzeugkomponenten zur Verfügung.

Vor diesem Hintergrund ist es eine Aufgabe der vorliegenden Erfindung, ein verbessertes Steer-by-Wire-Lenksystem und ein Kraftfahrzeug mit einem solchen Steer-by-Wire-Lenksystem bereitzustellen, bei dem vorteilhafterweise Bauraum im Bereich der Lenksäule und somit vorteilhafterweise Bauraum nahe an der Mensch-Fahrzeug-Schnittstelle freigegeben ist.

Zur Lösung dieser Aufgabe werden ein Steer-by-Wire-Lenksystem sowie ein Kraftfahrzeug gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Steer-by-Wire-Lenksystem für ein Kraftfahrzeug vor, wobei das Steer-by-Wire-Lenksystem eine Lenksäule mit einer Trageinheit und mit einer drehbar in der Lenksäule gelagerten Lenkwelle aufweist. Weiter weist das Steer-by-Wire-Lenksystem eine an der Lenkwelle drehfest angeordnete Lenkhandhabe und einen Feedback-Aktuator auf, wobei der Feedback-Aktuator ausgebildet ist, ein Drehmoment auf die Lenkwelle aufzubringen. Der Feedback-Aktuator ist dabei außerhalb der Trageinheit angeordnet. Insbesondere ist der Feedback-Aktuator außerhalb der Lenksäule angeordnet. Außerhalb der Trageinheit beziehungsweise außerhalb der Lenksäule heißt dabei insbesondere, dass der Feedback-Aktuator nicht an der Trageinheit angeordnet ist beziehungsweise nicht an der Lenksäule angeordnet ist. Insbesondere ist der Feedback-Aktuator auch nicht an dem gleichen karosseriefesten Trägerelement angeordnet, wie die Trageinheit. Weiter insbesondere ragt der Feedback-Aktuator nicht in die Trageinheit beziehungsweise die Lenksäule hinein, insbesondere auch nicht teilweise. Insbesondere ist der Feedback-Aktuator physisch von der Trageinheit beziehungsweise von der Lenksäule beabstandet. Insbesondere ist vorgesehen, dass der Feedback-Aktuator nicht im Bereich der Trageinheit und insbesondere nicht innerhalb der Trageinheit auf die Lenkwelle einwirkt beziehungsweise nicht im Bereich der Lenksäule und insbesondere nicht innerhalb der Lenksäule auf die Lenkwelle einwirkt, insbesondere auch nicht indirekt, beispielsweise über ein Getriebe. Dadurch, dass der Feedback-Aktuator außerhalb der Trageinheit beziehungsweise außerhalb der Lenksäule angeordnet ist, wird vorteilhafterweise Bauraum im Bereich der Lenksäule und somit vorteilhafterweise Bauraum nahe an der Mensch-Fahrzeug-Schnittstelle in einem Kraftfahrzeug freigegeben. Zudem gestaltet sich hierdurch vorteilhafterweise der Einbau des Lenksystems in ein Kraftfahrzeug flexibler und kann einfacher an unterschiedliche Fahrzeuge und Fahrzeugtypen, insbesondere an unterschiedliche PKW (PKW: Personenkraftwagen), angepasst werden. Weiter vorteilhaft sind die Funktion "Abstützen der Lenkhandhabe", wie bei einer klassischen Lenksäule, und die Funktion "Aufbringen des Rückstellmoments" bei dem vorgeschlagenen Steer-by-Wire-Lenksystem baulich voneinander entkoppelt.

Die Lenksäule des Steer-by-Wire-Lenksystems ist vorteilhafterweise ausgebildet, alle üblichen Funktionen, insbesondere Längsverstellbarkeit und/oder Höhenverstellbarkeit und/oder Energieabsorption im Crashfall, einzeln oder in Kombination zu realisieren. Insbesondere ist vorgesehen, dass die Lenksäule ein Stelleinheit und eine Verstelleinrichtung umfasst, wobei die Stelleinheit mittels der Verstelleinrichtung bezogen auf die Trageinheit verstellt werden kann, insbesondere bezüglich der Höhe und/oder bezüglich der Länge. Vorteilhafterweise umfasst die Verstelleinrichtung für die Höhenverstellung einen Elektromotor. Weiter vorteilhaft umfasst die Verstelleinrichtung für die Längsverstellung einen Elektromotor. Insbesondere ist die Stelleinheit der Lenksäule teleskopartig ausgebildet, wobei vorteilhafterweise wenigstens ein Innenmantelrohr in ein Außenmantelrohr verschiebbar ist. Weiter ist insbesondere vorgesehen, dass die Lenksäule Mittel aufweist, insbesondere wenigstens ein Befestigungsteil an der Trageinheit, um im Crashfall Energie abzubauen. Alternativ oder zusätzlich kann vorgesehen sein, dass die Stelleinheit ausgebildet ist, im Crashfall durch ein Durchrutschen gegenüber der Trageinheit Energie abzubauen.

Der Feedback-Aktuator des Steer-by-Wire-Lenksystems dient insbesondere zur Eintragung eines Drehmoments in die Lenkwelle, die auch Lenkspindel genannt wird, wobei das Drehmoment insbesondere von auf die gelenkten Fahrzeugräder eines Kraftfahrzeugs einwirkenden mechanischen Belastungen abhängig ist. Zu diesen mechanischen Belastungen zählen beispielsweise Reibungskräfte zwischen den Fahrzeugrädern und der Fahrbahn, wobei diese insbesondere abhängig vom Straßenbelag und von der Bodenbeschaffenheit sind, und Stöße, die beispielsweise durch Bodenwellen oder Schlaglöcher verursacht werden können. Der Feedback-Aktuator simuliert insofern insbesondere Kräfte, die bei einer mechanischen Kopplung der Lenkhandhabe mit den gelenkten Fahrzeugrädern auf die Lenkhandhabe wirken würden.

Gemäß einer vorteilhaften Ausgestaltung des vorgeschlagenen Steer-by-Wire-Lenksystems ist vorgesehen, dass der Feedback-Aktuator räumlich vor der Trageinheit angeordnet ist. Die räumliche Zuordnung bezieht sich dabei auf ein in einem Kraftfahrzeug eingebautes Lenksystem, wobei die bei einem Kraftfahrzeug üblichen Bezugnahmen "vorne" und "hinten", "rechts" und "links" gelten. Die Lenkhandhabe ist dementsprechend hinter der Trageinheit angeordnet. Insbesondere ist vorgesehen, dass der Feedback-Aktuator nicht rechts und nicht links neben der Trageinheit angeordnet ist und vorteilhafterweise auch nicht oberhalb und nicht unterhalb der Trageinheit angeordnet ist. Der vor der Trageinheit angeordnete Feedback-Aktuator kann aber insbesondere seitlich oder in der Höhe versetzt zu der Trageinheit angeordnet sein. Die Anordnung des Feedback-Aktuators räumlich vor der Trageinheit verlagert vorteilhafterweise Bauraum nach vorne in das Kraftfahrzeug und gibt somit Bauraum im Bereich der Lenksäule frei. Hierdurch werden vorteilhafterweise neue Gestaltungsmöglichkeiten für Kraftfahrzeughersteller geschaffen.

Gemäß einer weiteren vorteilhaften Ausgestaltung ist die Lenkwelle mit einem der Lenkhandhabe gegenüberliegenden vorderen Ende aus der Trageinheit herausgeführt, derart, dass ein sich von dem vorderen Ende erstreckender vorderer Lenkwellenabschnitt außerhalb der Trageinheit angeordnet ist, insbesondere vor der Trageinheit angeordnet ist. Der Feedback-Aktuator ist dabei vorteilhafterweise derart angeordnet, dass dieser das Drehmoment in dem vorderen Lenkwellenabschnitt auf die Lenkwelle aufbringt. Das Aufbringen des Drehmoments auf diesen Lenkwellenabschnitt kann dabei direkt oder indirekt erfolgen. Für ein indirektes Aufbringen ist insbesondere ein Getriebe vorgesehen, welches das Drehmoment von dem Motor des Feedback-Aktuators auf den Lenkwellenabschnitt überträgt. Vorteilhafterweise ist die Lenkwelle bei dieser Ausgestaltung gegenüber der Lenkwelle eines herkömmlichen Steer-by-Wire-Lenksystems verlängert. Der Feedback-Aktuator greift dabei vorteilhafterweise direkt am vorderen Ende der Lenkwelle an. Hierdurch ist die Distanz zwischen Trageinheit und Feedback-Aktuator vorteilhafterweise weiter vergrößert.

Eine vorteilhafte Ausgestaltungsvariante sieht eine weitere Lenkwelle vor, wobei die weitere Lenkwelle mit der Lenkwelle verbunden ist. Der Feedback-Aktuator ist dabei vorteilhafterweise derart angeordnet, dass dieser das Drehmoment auf die weitere Lenkwelle aufbringt, insbesondere direkt auf die weitere Lenkwelle aufbringt. Der Feedback-Aktuator überträgt das Drehmoment also vorteilhafterweise auf die weitere Lenkwelle, wobei das Drehmoment von der weiteren Lenkwelle über die Verbindung auf die Lenkwelle und von der Lenkwelle auf die Lenkhandhabe übertragen wird. Durch die weitere Lenkwelle wird die Flexibilität der Anordnung des Feedback-Aktuators vorteilhafterweise weiter erhöht, insbesondere weil die Längsachse der Lenkwelle und die Längsachse der weiteren Lenkwelle einen Winkel kleiner 180° einschließen können, also insbesondere nicht parallel angeordnet sein können. Wenn die weitere Lenkwelle gegenüber der Lenkwelle abgewinkelt ist, ergeben sich hieraus zudem Vorteile beim Crash-Verhalten des Lenksystems. Insbesondere kann auch vorgesehen, dass mehr als eine weitere Lenkwelle mit der Lenkwelle verbunden ist, wobei der Feedback-Aktuator das Drehmoment über mehrere weitere Lenkwellen auf die Lenkwelle und die Lenkhandhabe überträgt. Insbesondere ist vorgesehen, dass der Feedback-Aktuator derart an der weiteren Lenkwelle angeordnet ist, dass die weitere Lenkwelle und die Motorwelle des Feedback-Aktuators in derselben Längserstreckungsachse angeordnet sind.

Vorteilhafterweise ist die weitere Lenkwelle mit der Lenkwelle über eine Kupplung verbunden. Hierdurch kann besonders vorteilhaft zwischen der weiteren Lenkwelle und der Lenkwelle Rotation und damit ein Drehmoment übertragen werden. Eine Ausgestaltungsvariante sieht dabei vor, dass die Kupplung eine elastische Kupplung ist. Drehmomentspitzen können dabei vorteilhafterweise von der elastischen Kupplung gedämpft werden. Gemäß einer weiteren Ausgestaltungsvariante ist die Kupplung eine steife Kupplung. Vorteilhafterweise werden hierbei die von dem Feedback-Aktuator auf die weitere Lenkwelle aufgebrachten Drehmomente direkter auf die Lenkwelle übertragen.

Eine weitere vorteilhafte Ausgestaltung sieht vor, dass die weitere Lenkwelle mit der Lenkwelle über ein Universalgelenk verbunden ist. Das Universalgelenkt erlaubt dabei vorteilhafterweise, dass sich der Beugungswinkel zwischen der weiteren Lenkwelle und der Lenkwelle während der Drehmoment-Übertragung verändert. Diese Ausgestaltung begünstigt insofern weiter eine flexible Anordnung des Feedback-Aktuators außerhalb der Trageinheit.

Weiter ist vorteilhafterweise vorgesehen, dass dem Feedback-Aktuator eine Steuereinheit zugeordnet ist, wobei die Steuereinheit über einen Kommunikationskanal, insbesondere einen Kommunikationsbus, weiter insbesondere einen CAN-Bus (CAN: Controller Area Network), mit dem Feedback-Aktuator zur Signalübertragung verbunden ist. Die Steuereinheit steuert dabei den Feedback-Aktuator, insbesondere einen Elektromotors des Feedback-Aktuators. Insbesondere umfasst die Steuereinheit einen Regelkreis zur Erzeugung des Steuersignals für den Feedback-Aktuator, wobei für die Erzeugung des Steuersignals insbesondere ein an einer Welle eines Lenkungsaktuators erfasster Drehwinkel und/oder ein an einer Welle eines Lenkungsaktuators erfasstes Drehmoment vorgesehen ist. Insbesondere ist vorgesehen, dass der Feedback-Aktuator die Steuereinheit aufweist. Die Übertragung von Signalen zwischen der Steuereinheit und dem Feedback-Aktuator über den Kommunikationskanal kann drahtlos oder leitungsgebunden erfolgen. Insbesondere ist vorgesehen, dass der Kommunikationskanal derart ausgebildet ist, dass die Steuereinheit entfernt von dem Feedback-Aktuator angeordnet werden kann. Hierdurch wird vorteilhafterweise die Flexibilität bezüglich der Anordnung des Feedback-Aktuators weiter erhöht.

Erfindungsgemäß weist der Feedback-Aktuator Mittel zur Anordnung des Feedback-Aktuators an einer Spritzwand eines Kraftfahrzeugs auf. Vorteilhafterweise ist die Spritzwand eines Kraftfahrzeugs ausreichend steif ausgebildet, sodass der Feedback-Aktuator für das Aufbringen der Drehmomente ausreichend abgestützt wird. Insbesondere ist vorgesehen, dass der Feedback-Aktuator Befestigungslaschen mit Schraubenöffnungen als Mittel zur Anordnung des Feedback-Aktuators an einer Spritzwand eines Kraftfahrzeugs aufweist. Die Befestigungslaschen sind dabei gemäß einer vorteilhaften

Ausgestaltung gegenüber dem Feedback-Aktuator geneigt, insbesondere derart, dass der Feedback-Aktuator optimal zur Aufbringung des Drehmoments auf die Lenkwelle beziehungsweise die weitere Lenkwelle ausgerichtet werden kann. Insbesondere können als Mittel zur Anordnung des Feedback-Aktuators an einer Spritzwand eines Kraftfahrzeugs auch Seitenwangen oder ein den Feedback-Aktuator umgebender Seitenring vorgesehen sein. Darin sind vorteilhafterweise Löcher, insbesondere Schraubenöffnungen, sodass Schrauben oder Nieten oder andere Befestigungsmittel durch die Löcher zur Anbringung des Feedback-Aktuators an einer Spritzwand eines Kraftfahrzeugs geführt werden können. Durch eine Anordnung des Feedback-Aktuators an einer Spritzwand eines Kraftfahrzeugs ist der Feedback-Aktuator vorteilhafterweise vergleichsweise weit von der Lenksäule und der Trageinheit weggerückt, sodass vorteilhafterweise Bauraum um die Lenksäule freibleibt, der für andere Fahrzeugkomponenten genutzt werden kann und die Flexibilität der Gestaltung weiter erhöht.

Alternativ oder in Kombination mit der Anordnung des Feedback-Aktuators an der Spritzwand kann auch ein anderes Element, wie beispielsweise die Bodengruppe, des Kraftfahrzeugs eingesetzt werden.

Weiter vorteilhaft sind Elemente des Feedback-Aktuators als wenigstens ein erstes Modul und als wenigstens ein zweites Modul ausgebildet. Diese Ausbildung der Elemente als erste Module und zweite Module ermöglicht vorteilhafterweise einen modularen Aufbau des Feedback-Aktuators. Hierdurch werden vorteilhafterweise weitere Freiheitsgrade geschaffen, was die Anordnung des Feedback-Aktuators betrifft. Zudem ist der Feedback-Aktuator hierdurch weiter verbessert an unterschiedliche Fahrzeuge und unterschiedliche Fahrzeugtypen anpassbar. Insbesondere sind eine Steuereinheit und/oder ein Motor und/oder ein Getriebe und/oder ein Lenkwinkelbegrenzer als Elemente des Feedback-Aktuators vorgesehen. Gemäß einer Ausgestaltungsvariante kann dabei jedes der vorstehend genannten Elemente als ein eigenes Modul ausgebildet sein.

Eine weitere vorteilhafte Ausführungsform sieht vor, dass das wenigstens eine erste Modul zur Anordnung an einer ersten Seite einer Spritzwand eines Kraftfahrzeugs ausgebildet ist und das wenigstens eine zweite Modul zur Anordnung an einer zweiten Seite einer Spritzwand eines Kraftfahrzeugs ausgebildet ist. Es kann insbesondere vorgesehen sein, dass jeweils nur ein Modul an einer Seite einer Spritzwand angeordnet ist. Die ersten Module und die zweiten Module weisen zur Anordnung an einer Spritzwand insbesondere die Mittel zur Anordnung des Feedback-Aktuators an einer Spritzwand eines Kraftfahrzeugs auf. Dadurch, dass der Feedback-Aktuator damit teilweise an einer ersten Seite einer Spritzwand eines Kraftfahrzeugs angeordnet sein kann und teilweise an einer zweiten Seite dieser Spritzwand eines Kraftfahrzeugs angeordnet sein kann, werden die Gestaltungsmöglichkeiten zur Anordnung des Feedback-Aktuators vorteilhafterweise noch flexibler. Das führt zu noch mehr Gestaltungsfreiheit bei den Kraftfahrzeugherstellern. Insbesondere ist vorgesehen, dass die Mittel zur Anordnung des Feedback-Aktuators an einer Spritzwand eines Kraftfahrzeugs des ersten Moduls beziehungsweise der ersten Module und des zweiten Moduls beziehungsweise der zweiten Module so aufeinander abgestimmt sind, dass diese einander fixierend verbunden werden können, wobei eine Spritzwand dann zwischen den Modulen angeordnet ist.

Das ebenfalls zur Lösung der anfangs genannten Aufgabe vorgeschlagene Kraftfahrzeug umfasst eine Karosserie mit einer Spritzwand und ein erfindungsgemäß ausgebildetes Steer-by-Wire-Lenksystem, welches insbesondere die vorstehend beschriebenen Merkmale einzeln oder in Kombination aufweisen kann. Die Lenksäule des Steer-by-Wire-Lenksystems ist dabei mit der Trageinheit an der Karosserie des Kraftfahrzeugs angeordnet und der Feedback-Aktuator des Steer-by-Wire-Lenksystems ist an der Spritzwand des Kraftfahrzeugs angeordnet. Der Feedback-Aktuator ist somit insbesondere außerhalb der Trageinheit angeordnet. Vorteilhafterweise steht bei diesem Kraftfahrzeug in dem Bereich um die Lenksäule und in dem Bereich um die Trageinheit der Lenksäule mehr Bauraum zur Verfügung, der anderweitig genutzt werden kann, insbesondere für weitere Assistenzsysteme.

Eine vorteilhafte Ausgestaltung sieht vor, dass der Feedback-Aktuator innerhalb einer von der Karosserie gebildeten Fahrgastzelle an der Spritzwand angeordnet ist. Vorteilhafterweise ist der Feedback-Aktuator hierbei vor Einflüssen der äußeren Fahrzeugumgebung, beispielsweise vor Dreck und vor Spritzwasser, geschützt.

Gemäß einer Ausgestaltungsvariante ist der Feedback-Aktuator hingegen außerhalb einer von der Karosserie gebildeten Fahrgastzelle an der Spritzwand angeordnet. Insbesondere ist der Feedback-Aktuator dabei im Motorraum angeordnet. Hierdurch ist vorteilhafterweise Bauraum in der Fahrgastzelle frei. Da insbesondere bei Elektrofahrzeugen der Platzbedarf im Motorraum üblicherweise geringer ausfällt, als bei Fahrzeugen mit Verbrennungsmotor, wird der Motorraum darüber hinaus mitunter gerade dann besser ausgenutzt, wenn das Kraftfahrzeug ein Elektrofahrzeug ist. Zudem kann der Zugang zu dem Feedback-Aktuator über den Motorraum im Fehlerfall einfacher sein.

Bei einer weiteren Ausgestaltungsform, bei der Elemente des Feedback-Aktuators als wenigstens ein erstes Modul und als wenigstens ein zweites Module ausgebildet sind, wobei das wenigstens eine erste Modul und das wenigstens eine zweite Modul einen modularen Aufbau des Feedback-Aktuators ermöglichen, ist vorteilhafterweise vorgesehen, dass das wenigstens eine erste Modul außerhalb der Fahrgastzelle an der Spritzwand angeordnet ist und das wenigstens eine zweite Modul innerhalb der Fahrgastzelle an der Spritzwand angeordnet ist. Hierdurch ist die Flexibilität bezüglich der Anordnung des Feedback-Aktuators vorteilhafterweise noch weiter erhöht.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer stark vereinfachten Seitenansicht ein Ausführungsbeispiel für ein erfindungsgemäß ausgebildetes Kraftfahrzeug;
- Fig. 2: in einer perspektivischen, vereinfachten Darstellung ein Ausführungsbeispiel für ein erfindungsgemäß ausgebildetes Steer-by-Wire-Lenksystem;
- Fig. 3: in einer stark vereinfachten Seitenansicht einen Ausschnitt aus einem weiteren Ausführungsbeispiel für ein erfindungsgemäß ausgebildetes Kraftfahrzeug;
- Fig. 4: in einer stark vereinfachten Seitenansicht einen Ausschnitt aus einem weiteren Ausführungsbeispiel für ein erfindungsgemäß ausgebildetes Kraftfahrzeug;
- Fig. 5: in einer stark vereinfachten Seitenansicht einen Ausschnitt aus einem weiteren Ausführungsbeispiel für ein erfindungsgemäß ausgebildetes Kraftfahrzeug;
- Fig. 6: in einer stark vereinfachten Seitenansicht einen Ausschnitt aus einem weiteren Ausführungsbeispiel für ein erfindungsgemäß ausgebildetes Kraftfahrzeug;
- Fig. 7: in einer stark vereinfachten Seitenansicht einen Ausschnitt aus einem weiteren Ausführungsbeispiel für ein erfindungsgemäß ausgebildetes Kraftfahrzeug; und
- Fig. 8: in einer stark vereinfachten Seitenansicht ein weiteres Ausführungsbeispiel für ein erfindungsgemäß ausgebildetes Kraftfahrzeug.

In den verschiedenen Figuren sind gleiche Teile in der Regel mit den gleichen Bezugszeichen versehen und werden daher mitunter auch jeweils nur im Zusammenhang mit einer der Figuren erläutert.

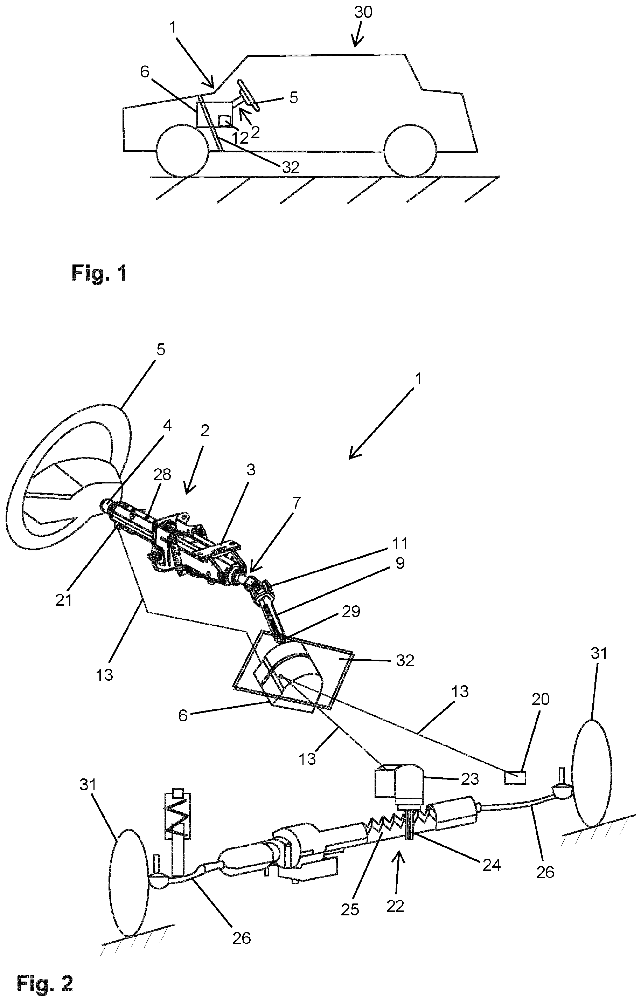

In Fig. 1 ist stark vereinfacht ein Ausführungsbeispiel für ein Kraftfahrzeug 30 dargestellt, das eine Karosserie mit einer Spritzwand 32 und ein Steer-by-Wire-Lenksystem 1 umfasst. Das Steer-by-Wire-Lenksystem 1 weist eine in Fig. 1 nur schematisch dargestellte Lenksäule 2 mit einer Trageinheit und einer drehbar in der Trageinheit gelagerten Lenkwelle auf. An der Lenkwelle ist drehfest eine Lenkhandhabe 5 angeordnet, insbesondere ein Lenkrad. Des Weiteren umfasst das Steer-by-Wire-Lenksystem 1 einen ebenfalls in Fig. 1 nur schematisch dargestellten Feedback-Aktuator 6, der ausgebildet ist, ein Drehmoment auf die Lenkwelle und somit auf die Lenkhandhabe 5 aufzubringen. Der Feedback-Aktuator 6 ist außerhalb der Lenksäule 2 angeordnet. Zur Befestigung derjenigen Elemente des Feedback-Aktuators 6, die Drehmomente abstützen müssen, wird die Spritzwand 32 des Kraftfahrzeugs 30 verwendet. Die Steuereinheit 12 des Feedback-Aktuators 6 kann dagegen an anderer Stelle angeordnet sein. Insbesondere ist aber auch eine Ausführungsform vorgesehen, bei der die Steuereinheit 12 ebenfalls an der Spritzwand 32 angeordnet ist.

Ein Ausführungsbeispiel für ein erfindungsgemäß ausgebildetes Steer-by-Wire-Lenksystem 1, bei dem mehr Ausgestaltungsdetails gezeigt sind, wird nachfolgend unter Bezugnahme auf Fig. 2 erläutert. Fig. 2 zeigt das Steer-by-Wire-Lenksystem 1 dabei in einer perspektivischen, schematischen Darstellung von schräg vorne bezogen auf die üblicherweise bei einem Kraftfahrzeug zugrunde gelegte Positionsangabe.

Das für ein Kraftfahrzeug, insbesondere für einen PKW (PKW: Personenkraftwagen), geeignete Steer-by-Wire-Lenksystem 1 umfasst eine Lenksäule 2 mit einer Trageinheit 3. Die Lenksäule 2 ist mittels der Trageinheit 3 an einem Kraftfahrzeug karosseriefest befestigbar. Die Lenksäule 2 umfasst in diesem Ausführungsbeispiel zudem eine Verstelleinrichtung und eine Stelleinheit mit einer Manteleinheit 28. In der Manteleinheit 28 ist eine Lenkwelle 4 drehbar gelagert. An dem hinteren Ende der Lenkwelle 4 ist ein Lenkrad als Lenkhandhabe 5 angeordnet. Mittels der Verstelleinrichtung kann die Stelleinheit und damit die Lenkhandhabe 5 bezogen auf die Trageinheit 3 in der Höhe und der Länge verstellt werden, wobei die Höhenverstellung durch ein Verschwenken der Stelleinheit gegenüber der Trageinheit 3 erfolgt. Die Längsverstellung erfolgt insbesondere durch ein teleskopartiges Ineinander- beziehungsweise Auseinanderschieben der Manteleinheit 28. Das Verstellen der Stelleinheit gegenüber der Trageinheit 3 kann insbesondere auch elektrisch erfolgen.

Die Trageinheit 3 weist zur Befestigung an einer Fahrzeugkarosserie Befestigungslaschen auf, die mit Schraubenöffnungen versehen sind. Durch diese Schraubenöffnungen kann die Trageinheit 3 mittels Befestigungsschrauben an einer Fahrzeugkarosserie angebracht werden. Die Trageinheit 3 kann auch ein Befestigungsteil aufweisen, welches dazu ausgebildet ist, bei einem in einem Kraftfahrzeug eingebauten Lenksystem im Crashfall Energie abzubauen. Die Befestigungslaschen sind dann insbesondere an diesem Befestigungsteil angeordnet.

Das Steer-by-Wire-Lenksystem 1 umfasst des Weiteren einen außerhalb der Lenksäule 2 angeordneten Feedback-Aktuator 6. Der Feedback-Aktuator 6 weist einen Elektromotor, insbesondere einen Permanentmagnet-Synchronmotor, auf. Der Elektromotor des Feedback-Aktuators 6 wirkt dabei auf das vordere Ende einer weiteren Lenkwelle 9 des Steer-by-Wire-Lenksystems 1 ein. Für die Verstellbarkeit der Lenkhandhabe 5 weist die weitere Lenkwelle 9 in diesem Ausführungsbeispiel einen teleskopierbaren Abschnitt 29 auf, dessen Ausdehnung ausgehend von dem Feedback-Aktuator 6 variabel eingestellt werden kann.

Da die weitere Lenkwelle 9 über ein Universalgelenk 11 mit der Lenkwelle 4 verbunden ist, bringt der Feedback-Aktuator 6 bei entsprechender Ansteuerung durch eine Steuereinheit ein Drehmoment über die weitere Lenkwelle 9 und das Universalgelenk 11 auf die Lenkwelle 4 und damit auch auf die Lenkhandhabe 5 auf. Die Steuereinheit ist in diesem Ausführungsbeispiel direkt an dem Elektromotor angeordnet. Für die Ansteuerung des Elektromotors des Feedback-Aktuators 6 empfängt die Steuereinheit des Feedback-Aktuators 6 über einen Kommunikationskanal 13 von einem Sensor 21 ein Signal bezüglich eines Drehwinkels der Lenkwelle 4. Weiter empfängt die Steuereinheit des Feedback-Aktuators 6 über einen Kommunikationskanal 13 von einem Sensor 20 ein Signal bezüglich eines Lenkwinkels der gelenkten Räder 31 des Kraftfahrzeugs.

Die Steuereinheit des Feedback-Aktuators 6 ist über einen Kommunikationskanal 13 zum Austausch von Signalen mit einer Lenkungssteuereinheit eines Lenkungsaktuators 23 des Steer-by-Wire-Lenksystems 1 verbunden, die einen Elektromotor des Lenkungsaktuators 23 steuert. Der Lenkungsaktuator 23 ist dabei zur Einwirkung auf die gelenkten Räder 6 des Kraftfahrzeugs in Abhängigkeit von einer erfassten Lenkvorgabe, die ein Fahrer über die Lenkhandhabe 5 auf die Lenkwelle 4 aufbringt, ausgebildet. Hierzu umfasst das Steer-by-Wire-Lenksystem 1 ein Lenkgetriebe 22. Ein von dem Elektromotor des Lenkungsaktuators 23 antreibbares Lenkritzel 24 wirkt dabei auf eine Zahnstange 25 ein. Das Lenkgetriebe 22 dient dabei zur Übersetzung einer rotatorischen Bewegung des Lenkritzels 24 in eine translatorische Bewegung der Zahnstange 25 entlang der Längsachse der Zahnstange 25. Die sich entlang ihrer Längsachse linear bewegende Zahnstange 25 ist jeweils zu beiden Seiten eines Kraftfahrzeugs mechanisch mit einer Spurstange 26 gekoppelt. Die Spurstangen 26 sind wiederum jeweils mit den gelenkten Rädern 31 eines Kraftfahrzeugs mechanisch gekoppelt.

Wie in Fig. 2 nur symbolisch angedeutet, ist vorgesehen, dass der Feedback-Aktuator 6 an der Spritzwand 32 eines Kraftfahrzeugs angeordnet ist. Die Spritzwand 32, von der in Fig. 2 nur symbolisch ein Ausschnitt dargestellt ist, dient dabei dazu, die Fahrgastzelle unterhalb desjenigen Bereichs, in dem die Windschutzscheibe eingesetzt ist, zu verschließen. Für die Anordnung an der Spritzwand 32 weist der Feedback-Aktuator 6 in Fig. 2 nicht explizit dargestellte Mittel zur Anordnung des Feedback-Aktuators 6 an der Spritzwand 32 auf. Insbesondere ist vorgesehen, dass der Feedback-Aktuator 6 wie die Trageinheit 3 Befestigungslaschen mit Schraubenöffnungen als Mittel zur Anordnung des Feedback-Aktuators 6 an der Spritzwand 32 aufweist.

Durch die Anordnung des Feedback-Aktuators 6 räumlich distanziert vor der Trageinheit 3 an der Spritzwand 32, fällt der für das Steer-by-Wire-Lenksystem 1 benötigte Bauraum um die Lenksäule 2 geringer aus. Insbesondere wird kein Bauraum hinter oder seitlich oder oberhalb oder unterhalb der Trageinheit 3 für eine Installation des Feedback-Aktuators benötigt, insbesondere weil der Feedback-Aktuator 6 vorteilhafterweise nicht an der Trageinheit 3 oder an der Lenksäule 2 angeordnet ist.

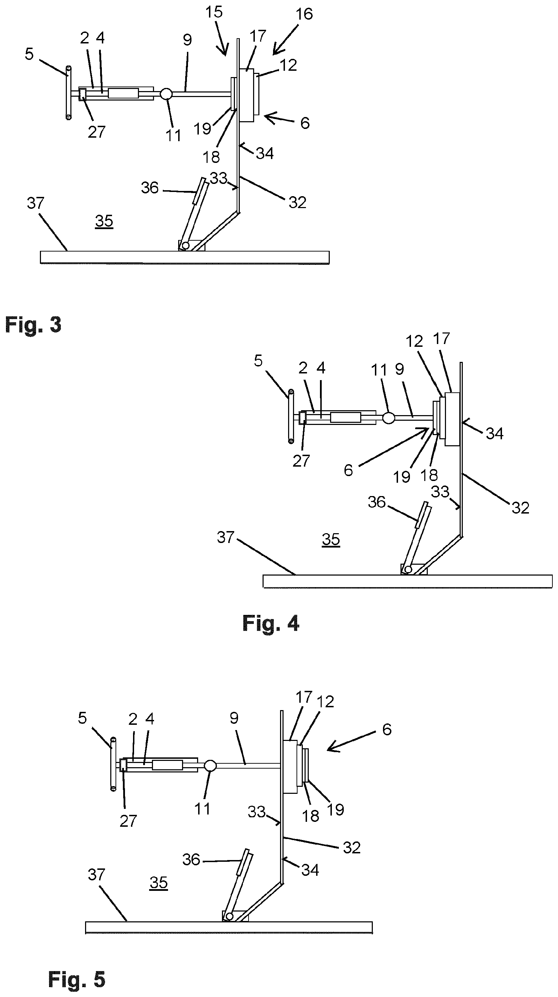

Unter Bezugnahme auf Fig. 3 bis Fig. 7 werden weitere unterschiedliche Ausführungsformen für ein in ein Kraftfahrzeug eingebautes Steer-by-Wire-Lenksystem 1 mit einer Lenksäule 2 erläutert. Die Lenksäule 2 kann insbesondere, wie in der EP 2 086 815 B1 beschrieben, ausgebildet sein.

Von der Karosserie des Kraftfahrzeugs ist dabei in Fig. 3 bis Fig. 7 jeweils schematisch ein Karosserieboden 37 dargestellt. Weiter ist jeweils ein Fahrpedal 36, bei dem es sich insbesondere um ein Gas- oder Strompedal handeln kann, und eine Spritzwand 32 des Kraftfahrzeugs schematisch dargestellt.

Von dem Steer-by-Wire-Lenksystem 1 ist in Fig. 3 bis Fig. 7 jeweils eine Lenksäule 2 mit einem Lager 27 dargestellt. In dem Lager 27 ist drehbar eine Lenkwelle 4 gelagert. An dem hinteren Ende der Lenkwelle 4 ist drehfest eine Lenkhandhabe 5 angeordnet. Weiter ist in Fig. 3 bis Fig. 7 jeweils der Feedback-Aktuator 6 des Steer-by-Wire-Lenksystems 1 dargestellt, der ausgebildet ist, ein Drehmoment auf die Lenkwelle 4 aufzubringen. Der Feedback-Aktuator 6 weist in den in Fig. 3 bis Fig. 7 dargestellten Ausführungsbeispielen jeweils einen Elektromotor 17, eine Steuereinheit 12 zur Ansteuerung des Elektromotors 17, ein Getriebe 18 und einen Lenkwinkelbegrenzer 19 auf, der das Einstellen eines Lenkwinkels mit der Lenkhandhabe 5 über eine vorgegebene Grenze hinaus verhindert. Der Feedback-Aktuator 6 ist dabei jeweils außerhalb der Lenksäule 2, nämlich räumlich beabstandet vor der Lenksäule 2 an der Spritzwand 32 angeordnet. Dazu weist der Feedback-Aktuator 6 jeweils Mittel zur Anordnung des Feedback-Aktuators 6 an der Spritzwand 32 auf.

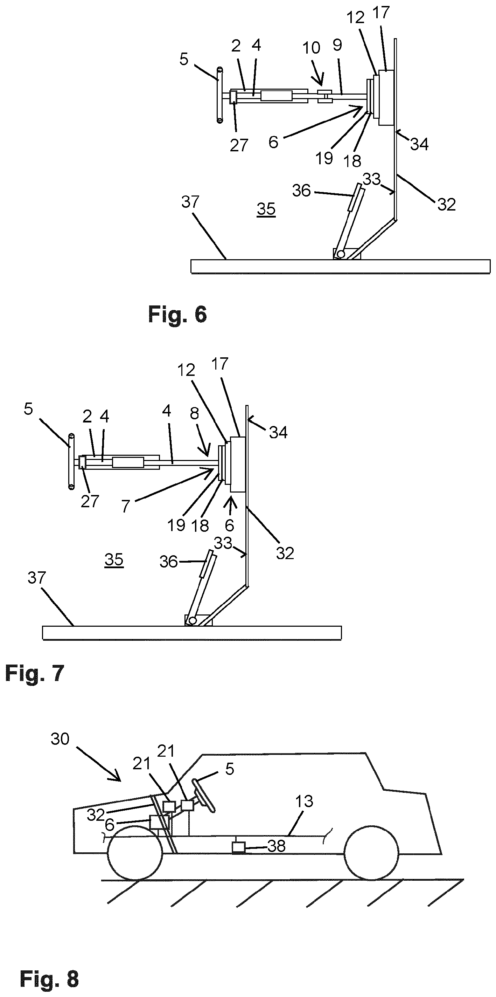

Bei den in Fig. 3 bis Fig. 6 dargestellten Ausführungsbeispiel weist das Steer-by-Wire-Lenksystem 1 neben der Lenkwelle 4 eine weitere Lenkwelle 9 auf, die mit der Lenkwelle 4 verbunden ist. Der Feedback-Aktuator 6 ist dabei derart eingerichtet, dass dieser unmittelbar auf die weitere Lenkwelle 9 wirkt, und bei entsprechender Ansteuerung mittels der Steuereinheit 12 ein Drehmoment über die weitere Lenkwelle 9 auf die Lenkwelle 4 und damit auf die Lenkhandhabe 5 überträgt. Bei den Ausführungsbeispielen gemäß Fig. 3 bis Fig. 5 ist die weitere Lenkwelle 9 dabei mit der Lenkwelle 4 über ein Universalgelenk 11 verbunden. Bei dem Ausführungsbeispiel gemäß Fig. 6 ist die weitere Lenkwelle 9 mit der Lenkwelle 4 über eine Kupplung 10 verbunden, wobei die Kupplung 10 steif oder elastisch ausgebildet sein kann, insbesondere abhängig davon, welche damit verbundene Eigenschaft gewünscht ist. Insbesondere kann die weitere Lenkwelle 9, anders als in Fig. 3 bis Fig. 6 dargestellt, gegenüber der Lenkwelle 4 abgewinkelt sein, insbesondere wie in Fig. 2 beispielhaft gezeigt.

Bei dem in Fig.7 dargestellten Ausführungsbeispiel ist dagegen keine weitere Lenkwelle 9 vorgesehen. Stattdessen ist die Lenkwelle 4 mit einem der Lenkhandhabe 5 gegenüberliegenden vorderen Ende 7 aus der Lenksäule 2 herausgeführt, sodass ein sich von dem vorderen Ende 7 erstreckender vorderer Lenkwellenabschnitt 8 außerhalb der Lenksäule 2 angeordnet ist. Der Feedback-Aktuator 6 ist in diesem Ausführungsbeispiel derart angeordnet, dass dieser das Drehmoment in dem vorderen Lenkwellenabschnitt 8, und somit außerhalb der Lenksäule 2, auf die Lenkwelle 4 aufbringt.

Die in Fig. 3 bis Fig. 7 gezeigten Ausführungsbeispiele unterscheiden sich zudem in der Anordnung des Feedback-Aktuators 6 an der Spritzwand 6.

Bei dem in Fig. 3 dargestellten Ausführungsbeispiel bilden das Getriebe 18 und der Lenkwinkelbegrenzer 19 des Feedback-Aktuators 6 erste Module 15 und der Elektromotor 17 und die Steuereinheit 12 des Feedback-Aktuators 6 zweite Module 16, wodurch ein modularer Aufbau des Feedback-Aktuators 6 ermöglicht ist. Die ersten Modulen 15 sind in diesem Fall an einer ersten Seite 33 der Spritzwand 32 angeordnet, wobei die erste Seite 33 zur Fahrgastzelle 35 weist. Die zweiten Module 16 sind in diesem Fall an einer zweiten Seite 34 der Spritzwand 32 angeordnet. Die Zuordnung der Elemente des Feedback-Aktuators 6, also insbesondere der Steuereinheit 12, des Motors 17, des Getriebes 18 und des Lenkwinkelbegrenzers 19, als erstes Modul 15 oder zweites Modul 16 kann dabei aber auch anders erfolgen. Insbesondere ist es vorteilhaft, wenn die Steuereinheit 12 in der Fahrgastzelle 35 oder an der der Fahrgastzelle 35 zugewandten Seite 33 der Spritzwand 32 angeordnet ist.

Bei den in Fig. 4, Fig. 6 und Fig. 7 dargestellten Ausführungsbeispielen ist der Feedback-Aktuator 6 vollständig an der ersten Seite 33 der Spritzwand 32 und damit in der Fahrgastzelle 35 angeordnet. Dagegen ist der Feedback-Aktuator 6 bei dem in Fig. 5 dargestellten Ausführungsbeispiel vollständig an der zweiten Seite 34 der Spritzwand 32 und damit außerhalb der Fahrgastzelle 35 angeordnet, insbesondere in einem Motorraum des Kraftfahrzeugs.

Unter Bezugnahme auf Fig. 8 wird ein schematisch dargestelltes Ausführungsbeispiel für ein Kraftfahrzeug 30 mit einem Steer-by-Wire-Lenksystem erläutert. Das Kraftfahrzeug 30 umfasst eine Karosserie mit einer Spritzwand 32, an welcher der Feedback-Aktuator 6 des Steer-by-Wire-Lenksystems angeordnet ist. Dem Feedback-Aktuator 6 ist eine Steuereinheit zur Ansteuerung des Elektromotors des Feedback-Aktuators zugeordnet, wobei die Steuereinheit über einen Kommunikationskanal 13, der in diesem Ausführungsbeispiel als CAN-Bus ausgebildet ist, mit dem Feedback-Aktuator 6 beziehungsweise dem Elektromotor des Feedback-Aktuators 6 zur Signalübertragung verbunden ist. Über den als CAN-Bus ausgebildeten Kommunikationskanal 13 ist die Steuereinheit des Feedback-Aktuators 6 zudem mit Sensoren 21 des Lenksystems und mit einer zentralen ECU 38 (ECU: Electronic Control Unit) des Kraftfahrzeugs 30 für einen Signalaustausch verbunden.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Steer-by-Wire-Lenksystem
- 2: Lenksäule
- 3: Trageinheit
- 4: Lenkwelle
- 5: Lenkhandhabe
- 6: Feedback-Aktuator
- 7: vorderes Ende der Lenkwelle (4)
- 8: vorderer Lenkwellenabschnitt der Lenkwelle (4)
- 9: weitere Lenkwelle
- 10: Kupplung
- 11: Universalgelenk
- 12: Steuereinheit
- 13: Kommunikationskanal
- 15: erstes Modul des Feedback-Aktuators
- 16: zweites Modul des Feedback-Aktuators
- 17: Motor des Feedback-Aktuators
- 18: Getriebe des Feedback-Aktuators
- 19: Lenkwinkelbegrenzer des Feedback-Aktuators
- 20: Sensor zur Lenkwinkelbestimmung
- 21: Sensor des Lenksystems
- 22: Lenkgetriebe
- 23: Lenkungsaktuator
- 24: Lenkritzel
- 25: Zahnstange
- 26: Spurstange
- 27: Lager
- 28: Manteleinheit
- 29: teleskopierbarer Abschnitt der weiteren Lenkwelle (9)
- 30: Kraftfahrzeug
- 31: gelenktes Rad
- 32: Spritzwand
- 33: erste Seite der Spritzwand (32)
- 34: zweite Seite der Spritzwand (32)
- 35: Fahrgastzelle
- 36: Fahrpedal
- 37: Karosserieboden
- 38: ECU

## Patentansprüche

1. Steer-by-Wire-Lenksystem (1) für ein Kraftfahrzeug (30) umfassend eine Lenksäule (2) mit einer Trageinheit (3) und einer drehbar in der Lenksäule (2) gelagerten Lenkwelle (4), eine an der Lenkwelle (4) drehfest angeordnete Lenkhandhabe (5) und einen Feedback-Aktuator (6), wobei der Feedback-Aktuator (6) ausgebildet ist, ein Drehmoment auf die Lenkwelle (4) aufzubringen, und wobei der Feedback-Aktuator (6) außerhalb der Trageinheit (3) angeordnet ist, **dadurch gekennzeichnet, dass** der Feedback-Aktuator (6) Mittel zur Anordnung des Feedback-Aktuators (6) an einer Spritzwand (32) eines Kraftfahrzeugs (30) aufweist.

2. Steer-by-Wire-Lenksystem (1) nach Anspruch 1, **dadurch gekennzeichnet, dass** der Feedback-Aktuator (6) außerhalb der Lenksäule (2) angeordnet ist.

3. Steer-by-Wire-Lenksystem (1) nach Anspruch 1 oder Anspruch 2, **dadurch gekennzeichnet, dass** der Feedback-Aktuator (6) räumlich vor der Trageinheit (3) angeordnet ist.

4. Steer-by-Wire-Lenksystem (1) nach einem der vorstehenden Ansprüche, **dadurch gekennzeichnet, dass** die Lenkwelle (4) mit einem der Lenkhandhabe (5) gegenüberliegenden vorderen Ende (7) aus der Trageinheit (3) herausgeführt ist, sodass ein sich von dem vorderen Ende (7) erstreckender vorderer Lenkwellenabschnitt (8) außerhalb der Trageinheit (3) angeordnet ist, wobei der Feedback-Aktuator (6) derart angeordnet ist, dass dieser das Drehmoment in dem vorderen Lenkwellenabschnitt (8) auf die Lenkwelle (4) aufbringt.

5. Steer-by-Wire-Lenksystem (1) nach einem der Ansprüche 1 bis 3, **gekennzeichnet durch** eine weitere Lenkwelle (9), wobei die weitere Lenkwelle (9) mit der Lenkwelle (4) verbunden ist, und der Feedback-Aktuator (6) derart angeordnet ist, dass dieser das Drehmoment auf die weitere Lenkwelle (9) aufbringt.

6. Steer-by-Wire-Lenksystem nach Anspruch 5, **dadurch gekennzeichnet, dass** die weitere Lenkwelle (9) mit der Lenkwelle (4) über eine elastische Kupplung (10) oder eine steife Kupplung (10) oder über ein Universalgelenk (11) verbunden ist.

7. Steer-by-Wire-Lenksystem (1) nach einem der vorstehenden Ansprüche, **dadurch gekennzeichnet, dass** der Feedback-Aktuator (6) Befestigungslaschen mit Schraubenöffnungen als Mittel zur Anordnung des Feedback-Aktuators (6) an einer Spritzwand (32) eines Kraftfahrzeugs (30) aufweist.

8. Steer-by-Wire-Lenksystem (1) nach einem der vorstehenden Ansprüche, **dadurch gekennzeichnet, dass** Elemente des Feedback-Aktuators (6) als wenigstens ein erstes Modul (15) und wenigstens ein zweites Modul (16) ausgebildet sind, die einen modularen Aufbau des Feedback-Aktuators (6) ermöglichen.

9. Steer-by-Wire-Lenksystem (1) nach Anspruch 8, **gekennzeichnet durch** eine Steuereinheit (12) und/oder einen Motor (17) und/oder ein Getriebe (18) und/oder einen Lenkwinkelbegrenzer (19) als Elemente des Feedback-Aktuators (6).

10. Steer-by-Wire-Lenksystem (1) nach Anspruch 8 oder Anspruch 9, **dadurch gekennzeichnet, dass** das wenigstens eine erste Modul (15) zur Anordnung an einer ersten Seite (33) einer Spritzwand (32) eines Kraftfahrzeugs (30) ausgebildet ist und das wenigstens eine zweite Modul (16) zur Anordnung an einer zweiten Seite (34) einer Spritzwand (32) eines Kraftfahrzeugs (30) ausgebildet ist.

11. Kraftfahrzeug (30) umfassend eine Karosserie mit einer Spritzwand (32) und ein Steer-by-Wire-Lenksystem (1) nach einem der vorstehenden Ansprüche, wobei die Lenksäule (2) des Steer-by-Wire-Lenksystems (1) mit der Trageinheit (3) an der Karosserie angeordnet ist und der Feedback-Aktuator (6) des Steer-by-Wire-Lenksystems (1) an der Spritzwand (32) angeordnet ist.

12. Kraftfahrzeug (30) nach Anspruch 11, **dadurch gekennzeichnet, dass** der Feedback-Aktuator (6) innerhalb einer von der Karosserie gebildeten Fahrgastzelle (35) an der Spritzwand (32) angeordnet ist.

13. Kraftfahrzeug (30) nach Anspruch 11, **dadurch gekennzeichnet, dass** der Feedback-Aktuator (6) außerhalb einer von der Karosserie gebildeten Fahrgastzelle (35) an der Spritzwand (32) angeordnet ist.

14. Kraftfahrzeug (30) nach Anspruch 11, wobei das Steer-by-Wire-Lenksystem (1) nach einem der Ansprüche 8 bis 10 ausgebildet ist, **dadurch gekennzeichnet, dass** das wenigstens eine erste Modul (15) innerhalb der Fahrgastzelle (35) an der Spritzwand (32) angeordnet ist und das wenigstens eine zweite Modul (16) außerhalb der Fahrgastzelle (35) an der Spritzwand (32) angeordnet ist.

## Claims

1. Steer-by-wire steering system (1) for a motor vehicle (30), comprising a steering column (2) having a support unit (3) and a steering shaft (4) rotatably mounted in the steering column (2), a steering handle (5) disposed in a rotationally fixed manner on the steering shaft (4), and a feedback actuator (6), wherein the feedback actuator (6) is configured to apply a torque to the steering shaft (4), and wherein the feedback actuator (6) is disposed outside the support unit (3), **characterized in that** the feedback actuator (6) has means for disposing the feedback actuator (6) on a bulkhead (32) of a motor vehicle (30).

2. Steer-by-wire steering system (1) according to Claim 1, **characterized in that** the feedback actuator (6) is disposed outside the steering column (2).

3. Steer-by-wire steering system (1) according to Claim 1 or Claim 2, **characterized in that** the feedback actuator (6) in spatial terms is disposed in front of the support unit (3).

4. Steer-by-wire steering system (1) according to one of the preceding claims, **characterized in that** the steering shaft (4) by way of a front end (7) opposite the steering handle (5) is routed out of the support unit (3) such that a front steering shaft portion (8) extending from the front end (7) is disposed outside the support unit (3), wherein the feedback actuator (6) is disposed in such a manner that the latter applies the torque to the steering shaft (4) in the front steering shaft portion (8).

5. Steer-by-wire steering system (1) according to one of Claims 1 to 3, **characterized by** a further steering shaft (9), wherein the further steering shaft (9) is connected to the steering shaft (4) and the feedback actuator (6) is disposed in such a manner that the latter applies the torque to the further steering shaft (9).

6. Steer-by-wire steering system according to Claim 5, **characterized in that** the further steering shaft (9) is connected to the steering shaft (4) by way of an elastic coupling (10) or a stiff coupling (10) or by way of a universal joint (11).

7. Steer-by-wire steering system (1) according to one of the preceding claims, **characterized in that** the feedback actuator (6) as means for disposing the feedback actuator (6) on a bulkhead (32) of a motor vehicle (30) has fastening tabs having screw openings.

8. Steer-by-wire steering system (1) according to one of the preceding claims, **characterized in that** elements of the feedback actuator (6) are configured as at least one first module (15) and at least one second module (16), said modules (15, 16) enabling a modular construction of the feedback actuator (6).

9. Steer-by-wire steering system (1) according to Claim 8, **characterized by** a control unit (12) and/or a motor (17) and/or a gear mechanism (18) and/or a steering angle delimiter (19) as elements of the feedback actuator (6).

10. Steer-by-wire steering system (1) according to Claim 8 or Claim 9, **characterized in that** the at least one first module (15) is configured for disposal on a first side (33) of a bulkhead (32) of a motor vehicle (30), and the at least one second module (16) is configured for disposal on a second side (34) of a bulkhead (32) of a motor vehicle (30).

11. Motor vehicle (30) comprising a body having a bulkhead (32) and a steer-by-wire steering system (1) according to one of the preceding claims, wherein the steering column (2) of the steer-by-wire steering system (1) by way of the support unit (3) is disposed on the body, and the feedback actuator (6) of the steer-by-wire steering system (1) is disposed on the bulkhead (32).

12. Motor vehicle (30) according to Claim 11, **characterized in that** the feedback actuator (6) is disposed on the bulkhead (32) within a passenger compartment (35) formed by the body.

13. Motor vehicle (30) according to Claim 11, **characterized in that** the feedback actuator (6) is disposed on the bulkhead (32) outside a passenger compartment (35) formed by the body.

14. Motor vehicle (30) according to Claim 11, wherein the steer-by-wire steering system (1) is configured according to one of Claims 8 to 10, **characterized in that** the at least one first module (15) is disposed on the bulkhead (32) within the passenger compartment (35), and the at least one second module (16) is disposed on the bulkhead (32) outside the passenger compartment (35).

## Revendications

1. Système de direction à commande électrique (1) pour un véhicule automobile (30), comprenant une colonne de direction (2) ayant une unité de support (3) et un arbre de direction (4) monté rotatif dans la colonne de direction (2), une poignée de direction (5) disposée de manière fixe en rotation sur l'arbre de direction (4), et un actionneur de rétroaction (6), dans lequel l'actionneur de rétroaction (6) est configuré pour appliquer un couple à l'arbre de direction (4), et dans lequel l'actionneur de rétroaction (6) est disposé à l'extérieur de l'unité de support (3), **caractérisé en ce que** l'actionneur de rétroaction (6) a des moyens pour disposer l'actionneur de rétroaction (6) sur une cloison (32) d'un véhicule automobile (30).

2. Système de direction à commande électrique (1) selon la revendication 1, **caractérisé en ce que** l'actionneur de rétroaction (6) est disposé à l'extérieur de la colonne de direction (2).

3. Système de direction à commande électrique (1) selon la revendication 1 ou la revendication 2, **caractérisé en ce que** l'actionneur de rétroaction (6) est disposé dans l'espace devant l'unité de support (3).

4. Système de direction à commande électrique (1) selon l'une des revendications précédentes, **caractérisé en ce que** l'arbre de direction (4), par l'intermédiaire d'une extrémité avant (7) opposée à la poignée de direction (5), est acheminé hors de l'unité de support (3) de sorte qu'une partie de l'arbre de direction avant (8) s'étendant à partir de l'extrémité avant (7) est disposée à l'extérieur de l'unité de support (3), dans laquelle l'actionneur de rétroaction (6) est disposé de telle sorte que ce dernier applique le couple à l'arbre de direction (4) dans la partie de l'arbre de direction avant (8).

5. Système de direction à commande électrique (1) selon l'une des revendications 1 à 3, **caractérisé par** un autre arbre de direction (9), dans lequel l'autre arbre de direction (9) est relié à l'arbre de direction (4) et l'actionneur de rétroaction (6) est disposé de telle sorte que ce dernier applique le couple à l'autre arbre de direction (9).

6. Système de direction à commande électrique selon la revendication 5, **caractérisé en ce que** l'autre arbre de direction (9) est relié à l'arbre de direction (4) au moyen d'un accouplement élastique (10) ou d'un accouplement rigide (10) ou au moyen d'un joint universel (11).

7. Système de direction à commande électrique (1) selon l'une des revendications précédentes, **caractérisé en ce que** l'actionneur de rétroaction (6) en tant que moyen pour disposer l'actionneur de rétroaction (6) sur une cloison (32) d'un véhicule automobile (30) comporte des pattes de fixation ayant des ouvertures pour les vis.

8. Système de direction à commande électrique (1) selon l'une des revendications précédentes, **caractérisé en ce que** les éléments de l'actionneur de rétroaction (6) sont configurés en au moins un premier module (15) et au moins un second module (16), lesdits modules (15, 16) permettant une construction modulaire de l'actionneur de rétroaction (6).

9. Système de direction à commande électrique (1) selon la revendication 8, **caractérisé par** une unité de commande (12) et/ou un moteur (17) et/ou un mécanisme d'engrenage (18) et/ou un délimiteur d'angle de braquage (19) en tant qu'éléments de l'actionneur de rétroaction (6).

10. Système de direction à commande électrique (1) selon la revendication 8 ou la revendication 9, **caractérisé en ce que** l'au moins un premier module (15) est configuré pour être disposé sur un premier côté (33) d'une cloison (32) d'un véhicule automobile (30), et l'au moins un second module (16) est configuré pour être disposé sur un second côté (34) d'une cloison (32) d'un véhicule automobile (30).

11. Véhicule automobile (30) comprenant une carrosserie avec une cloison (32) et un système de direction à commande électrique (1) selon l'une des revendications précédentes, dans lequel la colonne de direction (2) du système de direction à fil (1) par l'intermédiaire de l'unité de support (3) est disposée sur la carrosserie, et l'actionneur de rétroaction (6) du système de direction à fil (1) est disposé sur la cloison (32).

12. Véhicule automobile (30) selon la revendication 11, **caractérisé en ce que** l'actionneur de rétroaction (6) est disposé sur la cloison (32) à l'intérieur d'un habitacle (35) formé par la carrosserie.

13. Véhicule automobile (30) selon la revendication 11, **caractérisé en ce que** l'actionneur de rétroaction (6) est disposé sur la cloison (32) à l'extérieur d'un habitacle (35) formé par la carrosserie.

14. Véhicule automobile (30) selon la revendication 11, dans lequel le système de direction à commande électrique (1) est configuré selon l'une des revendications 8 à 10, **caractérisé en ce que** le au moins un premier module (15) est disposé sur la cloison (32) à l'intérieur de l'habitacle (35), et le au moins un second module (16) est disposé sur la cloison (32) à l'extérieur de l'habitacle (35).
